# EUROPEAN PATENT SPECIFICATION

(11) **EP 2 591 330 B1**
(45) Date of publication and mention of the grant of the patent: **01.01.2020**
(21) Application number: 11803197.0
(22) Date of filing: 06.07.2011
(51) Int. Cl.: G01N 1/22, F23N 5/00, G01N 31/12

(54) **METHOD AND ARRANGEMENT FOR CONTROLLING COLLECTION OF SMOKE GAS SAMPLES**
VERFAHREN UND ANORDNUNG ZUR STEUERUNG DES AUFFANGENS VON RAUCHGASPROBEN
PROCÉDÉ ET ARRANGEMENT POUR CONTRÔLER LA COLLECTE D'ÉCHANTILLONS DE GAZ DE FUMÉES

(30) Priority: 07.07.2010 FI 20105776
(43) Date of publication of application: 15.05.2013
(73) Proprietor: Teknologian tutkimuskeskus VTT Oy, 02150 Espoo (FI)
(72) Inventor: TSUPARI, Eemeli, FI-02044 Vtt (FI); NIEMINEN, Matti, FI-02044 Vtt (FI); ANTSON, Olli, FI-02044 Vtt (FI)
(74) Representative: Seppo Laine Oy
(86) International application number: PCT/FI2011/050638
(87) International publication number: WO 2012/004457

(56) References cited:
- WO-A1-02/06730
- WO-A1-02/06730
- WO-A1-2009/054718
- WO-A1-2009/054718
- WO-A2-2010/037448
- JP-A- 2005 017 018
- JP-A- 2005 017 018
- HAMALAINEN, K.M. ET AL.: 'Measurement of Biocarbon in Flue Gases Using 14C' RADIOCARBON vol. 49, no. 2, 2007, pages 325 - 330, XP055070080

## Description

The present invention relates to a method by means of which sampling of flue gases for C14 determination can be controlled.

The invention also relates to an arrangement for carrying out the method.

Monitoring various emissions has become increasingly important in the production of energy. For carbon dioxide emissions it is important to be able to monitor and prove the amounts of fuels used because in e.g. the amount of emission rights needed in trading of emissions as well as any taxes and subsidies for the produced electricity and heat are determined on the basis of the fuels used. Renewable fuels can be used for replacing fossil fuels and energy can be produced with lower carbon dioxide emissions. Often the use of renewable fuels is subsidized in various ways, such as price or production subsidies or lower taxation. However, especially in parallel and mixed combustion of fuels classed as fossil and renewable it is often hard to show which fuel has been used and in which amounts. One method of monitoring the amount of used fossil and renewable fuels is to sample the flue gases and analyze the relative amounts of carbon isotopes by means of C14 dating and thus determine how much fossil or renewable fuel has been used. The relative amount of biofuel used in energy production is important in e.g. production of electricity in order to correctly allocate the subsidy of the so-called bioelectricity.

The importance of monitoring increases in the use of renewable fuels as the control becomes more strict and the dating based on the carbon isotope 14C is becoming an important technological solution in flue gas measurements as well. As no continuous 14C measurement is available the measurement must be made on the basis of samples. Thus the representativeness of the samples taken for laboratory measurements is an essential problem for the chain of monitoring The representativeness of the samples is one of the most important issues relating to the accuracy of the chain of monitoring. The representativeness is considerably increased by continuously or very frequently sampling the flue gases, whereby it is preferable to control the amount of samples or the frequency of sampling as well as possible. The amount of collected samples to be analyzed also has an effect on the speed of processing the samples and the response time as well as the necessary laboratory capacity.

Further, unrepresentative samples can be of considerable economic meaning to the participants through the CO₂ emissions trade of the EU and subsidies of renewable fuel. WO 2009054718 discloses a method of solving problems related to the controlling of sampling. In this publication sampling is controlled on the basis of the volume of the flue gas flow. In this method the volume of the flue gas sample is directly proportional to the determined produced flue gas flow. Controlling on the basis of the volume of the flue gas flow can skew the sample, especially in parallel combustion of renewable and fossil fuels in case the samples are taken dry, as the humidity of renewable fuels is typically much higher than that of the fossil fuels. Thus the volume flow of the flue gas is determined from flue gases containing a large amount of water vapour from the biofuel which is not present in the dried sample. Thus it is possible that the amounts of carbon isotopes do not correspond with the amounts of used fuel.

JP 200517018 discloses a method for controlling sampling of flue gases for determining the biomass mix ratio by means of dating based on the isotope C-14. WO 0206730 discloses a method for determining relationship of renewable to non-renewable fuel in a fuel mixture. The method is based on determining at least one unstable, preferably radioactive, element on the reaction product of the plant.

The aim of the invention is to produce a method and arrangement by means of which it is possible to determine the proportion of fossil fuels and renewable fuels, i.e. biofuels.

The invention is based on controlling the sampling frequency or the amount of samples taken from dried flue gases on the basis of the current power output of the production plant.

According to an advantageous embodiment of the invention the sampling is controlled on the basis of the electric power produced by the plant.

According to an advantageous embodiment the sampling is controlled on the basis of boiler power.

Further, according to an embodiment the sampling is controlled on the basis of both electric power and boiler power.

According to an embodiment the control of sampling is combined with control on the basis of CO₂ content or oxygen content or both.

More specifically, the arrangement and method according to the invention are characterized by what is disclosed in the characterizing portions of the independent patent claims.

The preferred embodiments of the invention are more specifically defined in the dependent claims.

Considerable advantages are achieved by means of the invention.

The reliability, cost efficiency and accuracy of the monitoring chain are improved by means of the invention. Sampling controlled by boiler power or electric power is the most simple way or acquiring representative samples. In order to further improve resolution and to prevent skewing samples for a purpose the CO₂ or oxygen content measurement can also be included in the control of sampling. With these solutions in e.g. cases of parallel combustion the changing humidity, oxygen and nitrogen contents of the flue gases do not reduce the representativeness of the samples. The electric power or the boiler power of the plant is constantly known in the control system of the plant whereby no additional sensors or the like are needed. Power measurement is highly advanced and standardized, whereby control of sampling can easily be carried out by means of a signal received from the control system of the plant. If electric power is used as the control unit, power measurement can be carried out by a third party. This could be e.g. the electric grid operator. In this case the measurement can be the basis of trading and thus very difficult to manipulate by the provider.

When the proportion of biofuels can be accurately measured and so that the measurement cannot be manipulated, the trust of the policymakers and the users to the available data increases and it is easier to e.g. subsidize and develop energy production methods on the basis of reliable data.

In the following, the invention is described in more detail.

Here, boiler power means, as it generally does, the so-called fresh steam power after the boiler.

A number of plants comprise several boilers having a common flue gas channel. In these the control can be carried out by accumulated boiler power or, when using electric power for control, by accumulated electric power, which usually is the same as the electric power of the plant as used in this disclosure.

The use of renewable fuels is monitored by sampling the flue gases. The samples are dated using the dating method based on carbon isotope 14C, by means of which it is possible to distinguish the older fuels, often classed as fossil fuels, from the recently formed renewable fuels formed by organic masses, usually plants. In order to make the samples as representative as possible, the frequency and/or the amount of sampling is controlled on the basis of the electric power or boiler power of the boiler or even on the basis of both of these. Control using electric power and boiler power is simple and measurement of the power is reliable. Further, the measurement can be carried out by the operator of the grid, whereby the provider cannot manipulate the sampling.

The samples are taken from dried flue gas, whereby the humidity of the fuel has no essential effect on the measurement results, because the changing humidity only has a small effect on the total power. The algorithm controlling the sampling can be separately arranged for each production plant. The control can take place e.g. so that when the power is high, the amount of samples is increased and when the power is low, the amount of samples is reduced or so that when the power changes, i.e. increases or decreases, the sampling frequency is changed. These two control methods can be used in parallel or sequentially for optimizing the suitable sampling method. The aim is to guarantee sufficiently accurate monitoring using as small an amount of samples as possible, because laboratory measurements are expensive and as the amount of samples increases, the production of results can be delayed.

In this method sampling takes place subsequent to the drying of flue gases. The flue gas is dried by cooling the bypass flow taken from the flue gas channel or the chimney. When the flue gas flow has been dried, it is sampled for determining the C14 isotope. The sampling frequency and/or the amount of the samples is controlled on the basis of the power produced by the plant so that the sampling frequency or the amount of samples taken change on the basis of the power. The sampling frequency and/or amount of samples can be either directly proportional to power or the measurement can follow an optional control curve. If the control does not change linearly, it can be easier to fit the measurement to the current production method and changes as well as to different production plants. One skilled in the art of control and adjustment technology can sufficiently well optimize the control of sampling.

In principle any calculation device into which the measured power can be entered can be used for calculating the sampling method or a table can be planned for sampling from which it is possible to read sampling intervals and sample sizes as a function of power or a change of power. Thus any comparator device capable of converting measured or indicated power into sampling frequency or amounts of sampling is sufficient for controlling the sampling.

Mass flows are essential in the measurement of carbon dioxide emission as well as in the measurements of other greenhouse gases and controlling emissions. Thus this method is well suited to measurements of other greenhouse gases as well.

## Claims

1. A method of controlling sampling of flue gases in a combustion power plant comprising a boiler by means of which method it is possible to control sampling of flue gases for C14 carbon dating, in which method:
- a sample of flue gases is taken from the dried flue gas of the combustion power plant, and
- the proportions of renewable and fossil fuels are determined therefrom by means of dating based on isotope C14,
**characterized in that** at least one of the sampling frequency of the flue gases and the volume flow of the flue gas samples is changed on the basis of the power produced by the combustion power plant.

2. A method according to claim 1, **characterized in that** the sampling is controlled on the basis of the electric power produced by the combustion power plant.

3. A method according to claim 1, **characterized in that** sampling is controlled on the basis of boiler power of the combustion power plant.

4. A method according to claim 1, **characterized in that** the sampling is controlled on the basis of both the electric power and the boiler power of the combustion power plant.

5. A method according to any of the previous claims, **characterized in that** control on the basis of the CO₂ content or oxygen content or both is included in the control of the sampling.

6. An arrangement of controlling sampling of flue gases by means of which it is possible to control sampling of flue gases for C14 carbon dating, the arrangement comprising:
- means for taking a sample of the flue gas, and
- means for indicating the power of the sampled combustion power plant,
**characterized by** at least one comparator means by means of which the measured or indicated power can be converted to at least one of the sampling intervals or amounts of samples.

## Patentansprüche

1. Verfahren zum Steuern von Probennahme von Rauchgasen in einem Verbrennungskraftwerk, das einen Boiler umfasst, mittels welches Verfahrens es möglich ist, Probennahme von Rauchgasen für C14-Kohlenstoffdatierung zu steuern, in welchem Verfahren:
- eine Probe von Rauchgasen aus dem getrockneten Rauchgas des Verbrennungskraftwerks genommen wird und
- die Anteile erneuerbarer und fossiler Brennstoffe daraus mittels Datierung basierend auf Isotop C14 bestimmt werden,
**dadurch gekennzeichnet, dass** mindestens eines der Probenahmefrequenz der Rauchgase und des Volumenflusses der Rauchgasproben auf der Basis der Leistung geändert wird, die vom Verbrennungskraftwerk erzeugt wird.

2. Verfahren nach Anspruch 1, **dadurch gekennzeichnet, dass** die Probennahme auf der Basis der elektrischen Leistung gesteuert wird, die vom Verbrennungskraftwerk erzeugt wird.

3. Verfahren nach Anspruch 1, **dadurch gekennzeichnet, dass** Probennahme auf der Basis von Boilerleistung des Verbrennungskraftwerks gesteuert wird.

4. Verfahren nach Anspruch 1, **dadurch gekennzeichnet, dass** die Probennahme auf der Basis sowohl der elektrischen Leistung als auch der Boilerleistung des Verbrennungskraftwerks gesteuert wird.

5. Verfahren nach einem der vorstehenden Ansprüche, **dadurch gekennzeichnet, dass** die Steuerung auf der Basis des CO₂-Gehalts oder Sauerstoffgehalts oder beider in der Steuerung der Probennahme beinhaltet ist.

6. Anordnung zum Steuern von Probennahme von Rauchgasen mittels derer es möglich ist, Probennahme von Rauchgasen für C14-Kohlenstoffdatierung zu steuern, wobei die Anordnung umfasst:
- Mittel zum Nehmen einer Probe des Rauchgases und
- Mittel zum Angeben der Leistung des beprobten Verbrennungskraftwerks,
**gekennzeichnet durch** mindestens ein Vergleichsmittel, mittels dessen die gemessene oder angegebene Leistung in mindestens eines der Probenahmeintervalle oder Mengen von Proben umgewandelt werden kann.

## Revendications

1. Procédé de commande de l'échantillonnage de gaz de combustion dans une centrale électrique à combustion comprenant une chaudière
au moyen duquel procédé il est possible de commander l'échantillonnage de gaz de combustion pour une datation au carbone 14, dans lequel procédé :
- un échantillon de gaz de combustion est prélevé dans le gaz de combustion sec de la centrale électrique à combustion, et
- les proportions de combustibles renouvelables et fossiles sont déterminées à partir de celui-ci au moyen d'une datation basée sur l'isotope C14,
**caractérisé en ce qu'**au moins l'un parmi la fréquence d'échantillonnage des gaz de combustion et le débit volumique des échantillons de gaz de combustion sont modifiés sur la base de la puissance produite par la centrale électrique à combustion.

2. Procédé selon la revendication 1, **caractérisé en ce que** l'échantillonnage est commandé sur la base de la puissance électrique produite par la centrale électrique à combustion.

3. Procédé selon la revendication 1, **caractérisé en ce que** l'échantillonnage est commandé sur la base de la puissance de la chaudière de la centrale électrique à combustion.

4. Procédé selon la revendication 1, **caractérisé en ce que** l'échantillonnage est commandé à la fois sur la base de la puissance électrique et de la puissance de la chaudière de la centrale électrique à combustion.

5. Procédé selon l'une quelconque des revendications précédentes, **caractérisé en ce qu'**une commande sur la base de la teneur en CO₂ ou de la teneur en oxygène ou des deux est incluse dans la commande de l'échantillonnage.

6. Agencement de commande de l'échantillonnage de gaz de combustion au moyen duquel il est possible de commander l'échantillonnage de gaz de combustion pour une datation au carbone 14, l'agencement comprenant :
- un moyen pour prélever un échantillon du gaz de combustion, et
- un moyen pour indiquer la puissance de la centrale électrique à combustion échantillonnée,
**caractérisé par** au moins un moyen de comparaison au moyen duquel la puissance mesurée ou indiquée peut être convertie en au moins l'un parmi des intervalles d'échantillonnage ou des quantités d'échantillons.
